# EUROPÄISCHE PATENTSCHRIFT

(11) **EP 0 927 337 B1**
(45) Veröffentlichungstag und Bekanntmachung des Hinweises auf die Patenterteilung: **08.10.2003**
(21) Anmeldenummer: 98933518.7
(22) Anmeldetag: 13.05.1998
(51) Int. Cl.: G01D 11/24, G01D 21/02, G01L 9/00, G01L 19/00

(54) **VORRICHTUNG ZUR ERFASSUNG DES DRUCKS UND DER TEMPERATUR IM SAUGROHR EINER BRENNKRAFTMASCHINE UND VERFAHREN ZU IHRER HERSTELLUNG**
DEVICE FOR DETECTING THE PRESSURE AND TEMPERATURE IN THE INDUCTION PIPE OF AN INTERNAL COMBUSTION ENGINE AND METHOD FOR THE PRODUCTION OF SAID DEVICE
DISPOSITIF POUR DETERMINER LA PRESSION ET LA TEMPERATURE DANS LA CONDUITE D'ADMISSION D'UN MOTEUR A COMBUSTION INTERNE ET PROCEDE DE PRODUCTION DE CE DISPOSITIF

(30) Priorität: 22.07.1997 DE 19731420
(43) Veröffentlichungstag der Anmeldung: 07.07.1999
(73) Patentinhaber: ROBERT BOSCH GMBH, 70442 Stuttgart (DE)
(72) Erfinder: NÄGELE, Erwin, D-74394 Hessigheim (DE); KUHNT, Winfried, D-70193 Stuttgart (DE)
(86) Internationale Anmeldenummer: DE9801326
(87) Internationale Veröffentlichungsnummer: WO99005477

(56) Entgegenhaltungen:
- EP-A- 0 676 628
- EP-A- 0 704 687
- WO-A-94/10548
- DE-A- 2 851 716
- DE-A- 4 317 312
- DE-A- 19 711 939

## Beschreibung

### Stand der Technik

Die Erfindung betrifft zunächst eine Vorrichtung zur Erfassung des Drucks und der Temperatur im Saugrohr einer Brennkraftmaschine, wobei in einem gemeinsamen Gehäuse ein Temperatursensor und ein auf einem Träger zusammen mit einer Auswerteschaltung weitestgehend verspannungsarm befestigter Drucksensor angeordnet sind.

Eine Vorrichtung zur Erfassung des Drucks und der Temperatur im Saugrohr einer Brennkraftmaschine, bei der in einem gemeinsamen Gehäuse ein Temperatursensor und ein Drucksensor angeordnet sind, geht beispielsweise aus der DE 28 51 716 C1 hervor.

Die Kombination eines beispielsweise aus der DE 43 17 312 A1 hervorgehenden Drucksensors mit einem Temperaturfühler ist in Fig. 2 dargestellt.

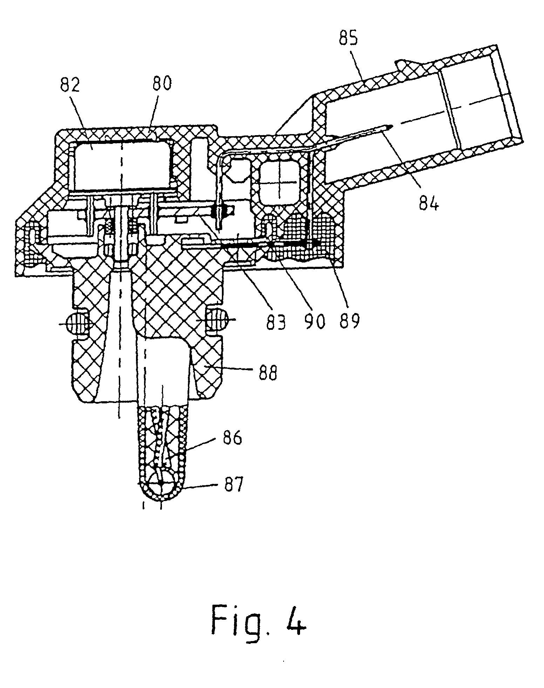

Bei dem in Fig. 4 dargestellten Drucksensor wird ein Ein-Chip-Silizium-Drucksensor (nicht dargestellt) verwendet, der eine Sensorzelle umfaßt, bei welcher der Druck auf der Rückseite einer Membran eingeleitet wird und bei dem auf der Vorderseite der Membran für die Messung des Absolutdrucks ein Referenzvakuum vorgesehen ist. Der Drucksensor ist in einem hermetisch dichten TO-Gehäuse 82 untergebracht, das seinerseits in dem Gehäuse 80 der gesamten Vorrichtung zur Erfassung des Drucks und der Temperatur angeordnet ist. In dem Gehäuse 80 ist des weiteren eine Leiterplatte 83 mit Kondensatoren angeordnet, die im Hinblick auf die elektromagnetische Verträglichkeit erforderlich sind. Die Leiterplatte 83 dient ferner der Verbindung zu Flachsteckerkontakten 84, die in einem an dem Gehäuse 80 angeformten Stutzen 85 angeordnet sind.

In einem Druckstutzen 88 ist ferner ein in eine rohrförmige Kunststoffhülse 87 eingespritzter Temperatursensor 86 in Form eines NTC-Widerstands angeordnet, dessen Anschlußleitungen über mit den NTC-Drähten verschweißte Einlegeteile 90 mit Flachsteckerkontakten 84 elektrisch leitend verbunden sind.

Eine derartige Vorrichtung zur Erfassung des Drucks und der Temperatur ist nicht nur auf sehr aufwendige Weise herzustellen, so müssen beispielsweise die elektrischen Verbindungen zwischen den Anschlußleitungen des Temperatursensors 86 und des Drucksensors 82 mit der Leiterplatte 83 and mit den Flachsteckerkontakten 84 im fertig montierten Zustand durch eine Lötverbindung hergestellt werden. Diese Lötverbindung muß daraufhin beispielsweise mit einer Klebemasse 89 zur Abdichtung vergossen werden.

Problematisch ist bei einer derartigen Vorrichtung auch, dass der Temperatursensor 86 in einer Kunststoffhülse 87 angeordnet ist, da hieraus eine für viele Anwendungen zu lange Ansprechzeit des Temperatursensors 86 resultiert.

Aus der nicht vorveröffentlichten DE 197 11 939 A1 geht eine Vorrichtung zur Erfassung des Drucks und der Temperatur im Saugrohr einer Brennkraftmaschine hervor, bei welcher zur Einleitung eines unter Druck stehenden Mediums ein an dem Gehäuse befestigtes Stutzenteil und ein sowohl mit dem Träger als auch mit dem Stutzenteil über mechanische Verspannungen entkoppelnde Dichtklebungen verbundenes Zwischenstück vorgesehen ist.

Eine derartige Vorrichtung ermöglicht zwar eine sehr gute Entkopplung von Verspannungen durch das Zwischenstück, welches sowohl mit dem Stutzenteil als auch mit dem Träger ausschließlich über elastische Dichtklebungen verbunden ist. Problematisch bei einer derartigen Vorrichtung ist jedoch ihre verhältnismäßig aurwendige Herstellung. Es muss nämlich zunächst das Zwischenstück an dem Träger befestigt werden, bevor das Stutzenteil abschließend befestigt werden kann.

Darüber hinaus lassen sich Verspannungen in dem Drucksensor nicht völlig ausschließen, da der Träger an einer Gehäusewand befestigt ist und insoweit vom Druck, der auf den Drucksensor wirkt, einseitig beaufschlagt wird, wodurch geringfügige Verspannungen auftreten können.

Bekannt ist durch die EP-A-0 704 687 eine Vorrichtung zur Erfassung des Drucks und der Temperatur im Saugrohr einer Brennkraftmaschine, bei der an einem Basisteil eines Gehäuses ein mit dem Saugrohr verbundener Stutzen und außerhalb des Stutzens ein Temperatursensor vorgesehen ist. Zwischen dem Basisteil und einem Deckelteil des Gehäuses wird eine Kammer gebildet und ein Trägerteil eingespannt, das von einem elektromagnetische Wellen abschirmenden metallenen Käfig umgeben ist. An dem Trägerteil, das als Keramiksubstrat ausgebildet ist, ist der Drucksensor ausgebildet.

Bei einem Halbleiterdrucksensor nach der EP-A-0 676 628 wird die Drucksensorplatte spannungsisoliert an einer Trägerplatte und die Trägerplatte spannungsisoliert und dicht an einem Gehäuse mittels einer Klebeverbindung befestigt.

Der Erfindung liegt daher die Aufgabe zugrunde, eine Vorrichtung zur Erfassung des Drucks und der Temperatur im Saugrohr einer Brennkraftmaschine der gattungsgemäßen

Art derart weiterzubilden, daß diese bei sehr einfacher Herstellung eine sehr präzise Druckmessung ermöglicht.

### Vorteile der Erfindung

Diese Aufgabe wird bei einer Vorrichtung zur Erfassung des Drucks und der Temperatur im Saugrohr einer Brennkraftmaschine gemäß den Merkmalen des Anspruches 1 gelöst.

Die Unterteilung des Gehäuses in wenigstens zwei voneinander getrennte Räume, in dessen einen der Teil des Trägers ragt, auf dem der Drucksensor mit Auswerteschaltung befestigt ist und dessen anderer der Befestigung des restlichen Teils des Trägers mit den elektrischen Anschlußelementen dient, wobei zur Befestigung des Trägers und zur Abdichtung des Druckraums mechanische Spannungen entkoppelnde Dichtklebeverbindungen vorgesehen sind, hat den besonders großen Vorteil, daß der Teil, auf dem der Drucksensor befestigt ist, im Druckraum von allen Seiten vom Druck beaufschlagt wird. Hierdurch werden mechanische Verspannungen des Trägers besser vermieden, als beispielsweise bei einer Befestigung an einer Gehäusewand. Besonders vorteilhaft ist auch, daß zwischen dem Stutzen und dem Träger Zwischenteile jedweder Art entfallen können, da der Druckraum direkt über den Stutzen mit dem Saugrohr verbunden ist.

Insbesondere hinsichtlich einer weiter unten noch näher zu beschreibenden einfachen Montage hat es sich als besonders vorteilhaft erwiesen, daß das Gehäuse ein Basisteil, an dem der Stutzen angeordnet und die Trägerplatte durch mechanische Verspannungen entkoppelnde Dichtklebungen befestigt ist, und ein mit dem Basisteil verbundenes Deckelteil umfaßt, das über dem Träger liegend angeordnet und eine Wand zur Ausbildung der beiden Räume aufweist, die mit der Trägerplatte durch mechanische Spannungen entkoppelnde Dichtklebungen verbunden ist.

Um Verspannungen des an dem Basisteil befestigten Deckelteils zu vermeiden, die auf den Träger und mithin den Drucksensor übertragen werden können, ist vorteilhafterweise vorgesehen, daß das Deckelteil an dem Basisteil ausschließlich über mechanische Spannungen entkoppelnde Dichtklebungen befestigt ist.

Rein prinzipiell kann das Trägerteil, auf dem der Drucksensor befestigt ist, frei schwebend in den Druckraum hineinragen. Eine insbesondere hinsichtlich der Montage vorteilhafte Auführungsform sieht vor, daß an dem Basisteil in dem Druckraum eine Auflagefläche vorgesehen ist, an der der Träger durch wenigstens eine mechanische Spannungen entkoppelnde Dichtklebeverbindung befestigt ist.

Um den Drucksensor gegenüber Umgebungseinflüssen zu schützen, ist vorteilhafterweise vorgesehen, daß um den Drucksensor ein Ring angeordnet ist und daß der Zwischenraum zwischen dem Ring und dem Drucksensor mit einem chemikalienbeständigen Gel ausgefüllt ist.

Hierfür hat sich Fluorsilikon-Gel als besonders vorteilhaft erwiesen.

Um eine besonders direkte Ankopplung des Temperatursensors an das zu messende Medium zu ermöglichen, ist vorteilhafterweise vorgesehen, daß der Temperatursensor an dem Basisteil derart befestigt ist, daß er in das Innere des Stutzens ragt.

Der Temperatursensor kann in dem Stutzen rein prinzipiell auf die unterschiedlichste Art und Weise befestigt werden.

Bei einer Ausführungsform ist vorgesehen, daß die Anschlußleitungen des Temperatursensors durch einen an dem Stutzen angeformten federnden Clipsbügel an zwei an dem Stutzen ausgebildeten Backen geklemmt werden. Auf diese Weise kann der Temperatursensor nicht nur auf sehr einfache Weise an dem Stutzen montiert und positioniert werden, es wird darüber hinaus auch durch die durch die Clipsbügel vermittelte Klemmverbindung eine beschädigungsfreie Befestigung der Anschlußleitungen des Temperatursensors ermöglicht.

Um sicherzustellen, daß der Temperatursensor und seine Anschlußleitungen nicht korrodieren oder durch andere Umgebungseinflüsse beschädigt und angegriffen werden, ist vorteilhafterweise vorgesehen, daß der Temperatursensor und dessen Anschlußleitungen mit einem Schutzlack oder einer Schutzbeschichtung, vorzugsweise einem Polyesterimidlack überzogen sind.

Insbesondere hinsichtlich einer vorteilhaften und einfach herzustellenden Abdichtung der aus dem Druckraum herausgeführten Anschlußleitungen des Temperatursensors ist vorgesehen, daß die Anschlußleitungen des Temperatursensors durch die Dichtklebeverbindung/en zwischen dem Träger und dem Hasisteil geführt sind.

Eine andere Ausführungsform sieht vor, daß der Temperatursensor in eine in dem Stutzen ausgebildete Aufnahme geschoben und durch eine Klebeverbindung, die zwischen dem Träger und dem Basisteil angeordnet ist und die Enden der Anschlußleitung des Temperatursensors umschließt, befestigt ist.

Diese Befestigungsweise hat insbesondere den Vorteil, daß der Temperatursensor von oben in dem Stutzen befestigt werden kann, d.h. zur Befestigung des Temperatursensors die gleiche Montagerichtung vorgesehen ist wie auch zur Befestigung des Drucksensors.

Zur Vermeidung von Korrosion und Beschädigungen durch Umgebungseinflüsse sind in diesem Falle die Anschlußleitungen des Temperatursensors bis auf ihre zur Kontaktierung freiliegenden Enden vorteilhafterweise teflonbeschichtet und es ist vorgesehen, daß sowohl die freiliegenden Enden als. auch wenigstens ein Teilabschnitt der teflonbeschichteten Anschlußleitungen in der Klebemasse eingebettet sind. Auf diese Weise wird eine besonders stabile Verbindung, die gleichzeitig auch isolierend wirkt, vermittelt, da die Klebemasse besonders gut auf den nicht teflonbeschichteten freiliegenden Anschlußenden haftet.

Um eine besonders einfache Montage zu ermöglichen, ist darüber hinaus bei einer vorteilhaften Ausführungsform vorgesehen, daß zur Kontaktierung der Anschlußleitungen des Temperatursensors mit im Gehäuse angeordneten, nach außen geführten Steckerkontaktstiften Schneidklemmverbindungen vorgesehen sind.

Zur Kontaktierung der Anschlußleitungen des Temperatursensors mit im Gehäuse angeordneten, nach außen geführten Steckerkontaktstiften sind vorzugsweise Leitklebeverbindungen und/oder Lötverbindungen und/oder Schweißverbindungen vorgesehen.

Die erfindungsgemäße Aufgabe wird darüber hinaus auch noch durch ein Verfahren zur Herstellung einer Vorrichtung zur Erfassung des Drucks und der Temperatur im Saugrohr einer Brennkraftmaschine gelöst, welches durch folgende Schritte gekennzeichnet ist:
- Befestigen eines Temperatursensors mit Anschlußleitungen in einem Basisteil eines Gehäuses;
- Herstellung der elektrischen Kontaktierung der Anschlußleitungen mit Sfceckerkontaktstiften, die in dem Basisteil vorgesehen sind;
- Befestigen eines Trägers durch mechanische Verspannungen entkoppelnde Dichtklebungen an dem Basisteil;
- Kontaktierung der elektrischen Kontaktelemente des Trägers mit Kontaktelementen, die in dem Basisteil vorgesehen sind, und
- Befestigen eines Deckelteils an dem Träger und an dem Basisteil durch mechanische Verspannungen entkoppelnde Dichtklebungen.

Durch dieses Verfahren ist auf besonders vorteilhafte Weise eine schnelle und daher kostengünstige Herstellung einer sehr präzise arbeitenden Vorrichtung zur Erfassung des Drucks und der Temperatur im Saugrohr einer Brennkraftmaschine möglich.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Schnittdarstellung eines ersten Ausführungsbeispiels einer erfindungsgemäßen Vorrichtung zur Erfassung des Drucks und der Temperatur im Saugrohr einer Brennkraftmaschine;
- Fig. 2: eine schematische Draufsicht eines der Befestigung eines Temperatursensors dienenden, an dem Stutzenteil angeordneten Clipsbügels;
- Fig. 3: eine Schnittdarstellung eines zweiten Ausführungsbeispiels einer erfindungsgemäßen Vorrichtung zur Erfassung des Drucks und der Temperatur im Saugrohr einer Brennkraftmaschine und
- Fig. 4: eine aus dem Stand der Technik bekannte Vorrichtung zur Erfassung des Drucks und der Temperatur im Saugrohr einer Brennkraftmaschine.

### Beschreibung der Ausführungsbeispiele

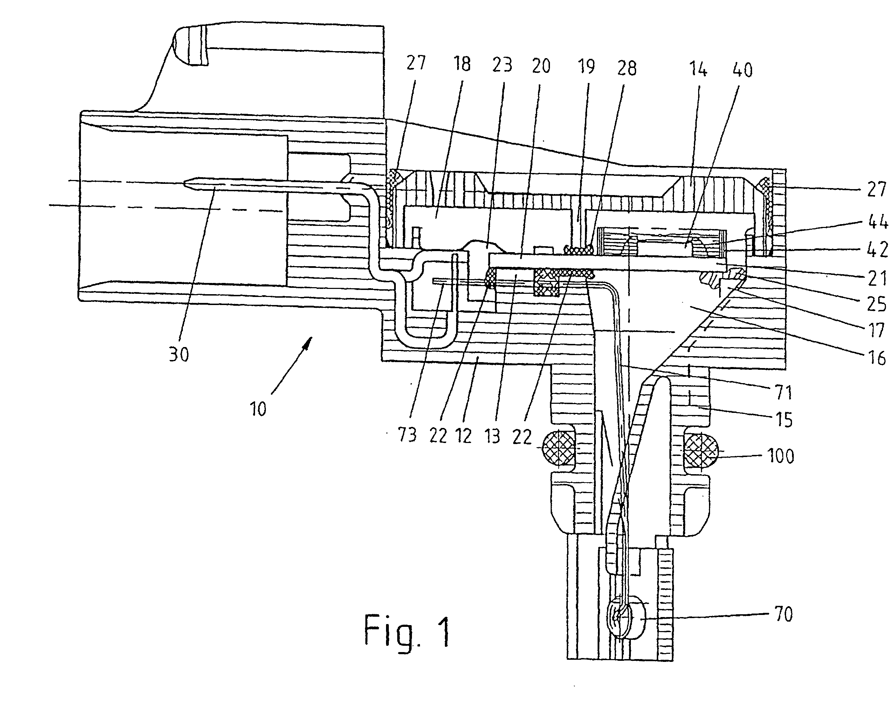

Ein erstes Ausführungsbeispiel einer Vorrichtung zur Erfassung des Drucks und der Temperatur im Saugrohr einer Brennkraftmaschine, dargestellt in Fig. 1 umfaßt ein als Ganzes mit 10 bezeichnetes Gehäuse, welches ein Basisteil 12 und ein Deckelteil 14 umfaßt.

Das Gehäuse 10 ist in zwei Räume unterteilt, einen Druckraum 16 und einen weiteren Raum 18, in dem ein Träger 20 durch mechanische Verspannungen entkoppelnde Dichtklebungen 22 an dem Basisteil 12 befestigt ist. Der Träger 20 ist dabei so an einem Steg 13 des Basisteils 12 befestigt, daß der Träger 20 lediglich auf dem Steg 13 aufliegt. Der Steg 13 ist an der Stelle angeordnet, an der Bonddrähte 23 auf dem Träger 20 kontaktiert sind. Die Bonddrähte 23 stellen die elektrische Verbindung zwischen Flachsteckerkontakten 30, die im Basisteil 12 angeordnet sind, und den elektrischen Verbindungsleitungen auf dem Träger 20 dar.

Auf dem Träger 20 ist ein an sich bekannter Drucksensor 40 angeordnet, der einen Glassockel sowie einen auf diesem angeordneten Siliziumchip aufweist, auf dessen Oberfläche z.B. eine Auswerteschaltung vorgesehen ist, die beispielsweise in Form einer Wheatstonebrücke aus piezoresistiven Widerstandselementen aufgebaut ist. Die für die Druckerfassung notwendige Membran ist durch Ätzen der Siliziumchiprückseite hergestellt. Die Verbindung des Siliziumchips mit dem Glassockel wird unter Vakuum hergestellt, so daß sich anschließend in der freigeätzten Kaverne ein Vakuum befindet.

Der dem Deckelteil 14 zugewandte Drucksensor 40 ist von einem Ring 42, beispielsweise einem IC-Ring, umgeben. Der Zwischenraum 44 zwischen dem Ring 42 und dem Drucksensor 40 ist mit einem Fluorsilikon-Gel ausgefüllt. Durch dieses Fluorsilikon-Gel wird sichergestellt, daß der Drucksensor 40 einschließlich seiner Dünndrahtgoldbonds vor einer Berührung und einem Kontakt mit in einer Brennkraftmaschine vorhandenen Medien, wie beispielsweise Benzin oder Abgaskondensat, geschützt ist.

Der Drucksensor 40 ist auf einem Teil 21 des Trägers 20 angeordnet, der in den Druckraum 16 ragt. Der Druckraum 16 ist über den mit dem Basisteil 12 einstückig verbundenen Stutzen 15 mit dem (nicht dargestellten) Saugrohr der Brennkraftmaschine verbunden. Die Auswerteschaltung ist vorzugsweise auf dem Chip des Drucksensors 40 aufgebracht. Möglich ist auch, diese auf der dem Deckel 40 zugewandten, im Druckraum 16 befindlichen Seite des Trägers 20 aufzubringen. Zusätzlich zur Auswerteschaltung kann noch eine EMV-Schutzbeschaltung z.B. außerhalb des Druckraums beispielsweise im Raum 18 vorgesehen sein.

In dem Druckraum 16 kann an dem Basisteil eine Auflagefläche 17 vorgesehen sein, auf dem das freie Ende des Teils 21 des Trägers 20 über eine, mechanische Verspannung entkoppelnde Dichtklebeverbindung 25 befestigt ist. Dies dient hauptsächlich der Montage und verhindert, daß der Träger 20 bei der Montage in den Druckraum 16 hineinkippt.

Der Deckel 14 ist mit dem Basisteil 12 ebenfalls durch mechanische Verspannungen entkoppelnde Dichtklebeverbindungen 27 verbunden.

Der Deckel 14 weist benachbart zu dem Drucksensor 40 eine Wand 19 auf, die mit dem Träger 20 über eine, mechanische Verspannung entkoppelnde Dichtklebeverbindung 28 verbunden ist. Durch diese Wand 19 wird auf besonders einfache Weise eine druckdichte Unterteilung des Gehäuses in die beiden Räume 16, 18 erzielt. Gleichzeitig dient die Wand 19 der Stabilisierung des Trägers 20.

Ein Temperatursensor 70 ist in dem Basisteil 12 derart angeordnet, daß er in den Stutzen 15 hineinragt. Die Anschlußleitung 71 des Temperatursensors 70 sind durch die Dichtklebeverbindung 21 zwischen dem Basisteil 12 und dem Träger 20 geführt.

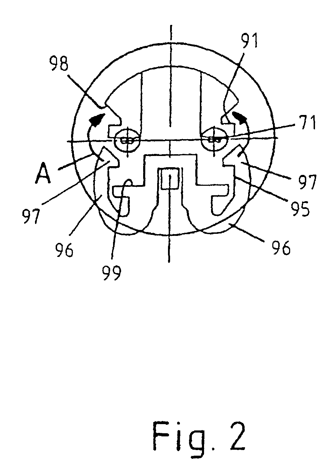

Bei dem in Fig. 1 und Fig. 2 dargestellten Ausführungsbeispiel ist der Temperatursensor in Form eines NTC-Widerstands durch einen an dem Stutzen 15 angeformten federnden Clipsbügel 95 befestigt. Der Clipsbügel 95 ist in Fig. 2 im nicht montierten Zustand dargestellt. Zur Befestigung der Anschlußleitung 71 des Temperatursensors 70 werden zwei Klemmelemente 96, die in ihrem den Anschlußleitungen 71 des Temperatursensors 70 zugewandten vorderen Bereich Rastnasen 97 aufweisen, derart in am Clipsbügel 95 vorgesehenen Rastöffnungen 98 entlang durch die Pfeile A gezeigten Richtungen gedrückt, daß an den Backen 96 angeformte Klemmflächen 99 an den Anschlußleitungen 71 des Temperatursensors 70 zur Anlage kommen und diesen an Vorsprüngen 91, die an dem Stutzenteil 15 angeformt sind, festklemmen. Der Clipsbügel 95 ist dabei so gestaltet, daß eine O-Ring-Dichtung 100 (Fig. 1) zur Dichtung des Stutzens 15 nur dann auf den Stutzen 15 aufgeschoben werden kann, wenn der Temperatursensor 70 durch die beschriebene Clipsverbindung bereits an dem Stutzenteil 15 befestigt ist.

Die abgewinkelten Anschlußleitungen 71 des Temperatursensors 70 werden nachdem sie durch die Dichtklebeverbindungen 22 herausgeführt sind, mittels einer an sich bekannten Schneidklemmverbindung 73 mit Steckerkontaktstiften 30 elektrisch leitend verbunden. Die Steckerkontaktstifte 30 weisen hierzu in ihrem unteren Bereich (nicht dargestellte) V-förmige Öffnungen auf, in die die Anschlußleitungen 71 des Temperatursensors 70 auf an sich bekannte Weise eingedrückt werden.

Sowohl der Temperatursensor 70 als auch dessen Anschlußleitungen 71 sind von einem Polyesterimid-Schutzlack überzogen, wodurch nicht nur ein Schutz gegenüber Medien, die von außen auf den Temperatursensor 70 und dessen Anschlußleitung 70 einwirken, bewerkstelligt wird, sondern auch eine besonders günstige Ansprechzeit des Temperatursensors erreicht wird.

Durch die beschriebene Anordnung des Drucksensors 40 im Druckraum 16 wird auf besonders vorteilhafte Weise sichergestellt, daß sich der gesamte Drucksensor 40 in dem mit einem Druck beaufschlagten Medium befindet, wodurch Verspannungen des Drucksensors, die bei einseitiger Beaufschlagung des Drucksensors mit dem unter Druck stehenden Medium entstehen können, vermieden werden.

Es ist hervorzuheben, daß die Auflagefläche 17 auf der der Teil 21 des Trägers 20, auf dem der Drucksensor 40 befestigt ist, über eine Dichtklebeverbindung 25 aufliegt, nicht unbedingt erforderlich ist. Vielmehr kann der Teil 21 des Trägers 20, auf dem der Drucksensor 40 befestigt ist auch frei schwebend in den Druckraum 16 ragen.

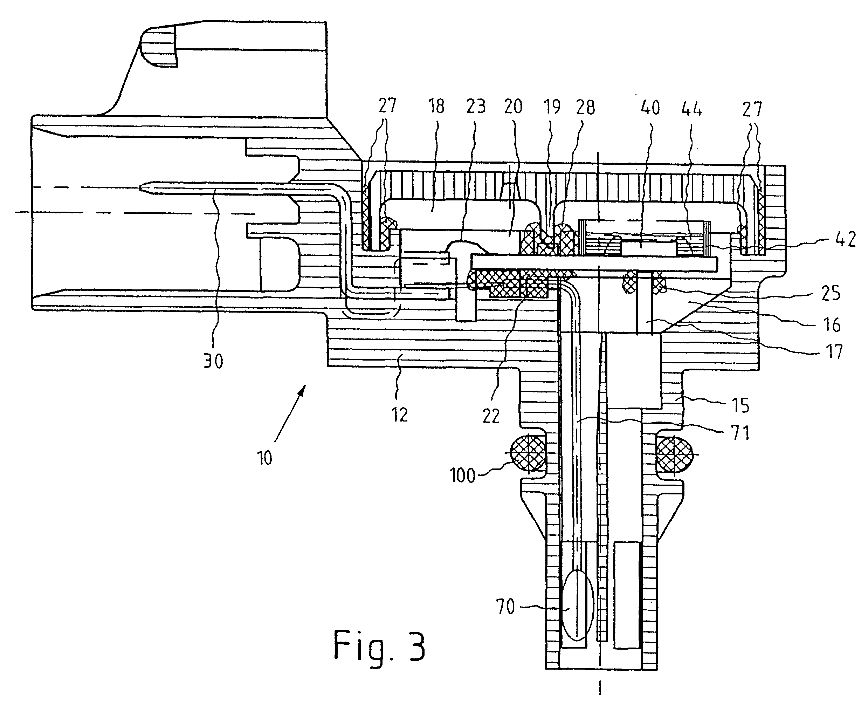

Bei einem zweiten Ausführungsbeispiel einer Vorrichtung zur Erfassung des Drucks und der Temperatur im Saugrohr einer Brennkraftmaschine, dargestellt in Fig. 3 sind diejenigen Elemente, die mit denen des ersten identisch sind, mit denselben Bezugszeichen versehen, so daß bezüglich deren Beschreibung auf die Ausführungen zum ersten Ausführungsbeispiel voll inhaltlich Bezug genommen wird.

Im Gegensatz zu dem ersten Ausführungsbeispiel ist jedoch der Temperatursensor 70 nicht durch eine Clipsverbindung an dem Stutzen 15 befestigt, sondern in eine für ihn vorgesehene Aufnahme von oben eingeschoben. Die Anschlußleitungen 71 des Temperatursensors 70 sind abgewinkelt und an ihren Enden in der zwischen dem Basisteil 12 und dem Träger 20 angeordneten Dichtklebeverbindung 22 befestigt. Die Anschlußleitungen 71 des Temperatursensors 70 sind bis auf ihre zur Kontaktierung freiliegenden Enden teflonbeschichtet. Die Dichtklebeverbindung 22 umschließt dabei sowohl die freiliegenden Enden als auch wenigstens einen Teilabschnitt der teflonbeschichteten Anschlußleitungen 71. Auf diese Weise wird eine besonders gute Befestigung erzielt, da die Klebemasse besonders gut an den freiliegenden metallischen Anschlußbeinen haftet.

Ferner sind im Gegensatz zu dem in Fig. 1 dargestellten Ausführungsbeispiel die Anschlußleitungen des Temperatursensors 70 mit den Steckerkontaktstiften 30 nicht durch Schneidklemmverbindungen, sondern beispielsweise durch Leitklebeverbindungen oder durch Schweißverbindungen oder durch Lötverbindungen kontaktiert und verbunden.

Darüber hinaus sind statt der an dem Basisteil 12 am Rande angeordneten Auflageflächen 17 punktförmige Auflageflächen 17a vorgesehen, die an irgendeiner Stelle unter dem Träger 20, beispielsweise unter dem Drucksensor 40, wie in Fig. 3 dargestellt, angeordnet sind.

Der in Fig. 1 und 3 dargestellte Drucksensor 40 wird vorzugsweise auf folgende Weise hergestellt. Zunächst wird der Temperatursensor 70 an dem Stutzen 15 des Basisteils 12 auf die oben beschriebene Weise befestigt. Daraufhin werden die elektrischen Anschlußleitungen 71 des Temperatursensors 70 mit den Steckerkontaktstiften 30 kontaktiert. Dies kann beispielsweise durch Leitklebeverbindungen geschehen. In diesem Falle kann die Aushärtezeit derartiger Leitklebeverbindungen auf besonders vorteilhafte Weise kombiniert werden mit der Aushärtezeit der im folgenden zu beschreibenden Dichtklebeverbindungen, durch welche der Träger an dem Basisteil befestigt wird.

Daraufhin wird der Träger 20 an dem Basisteil 12 durch die Dichtklebeverbindung 22, welche mechanische Verspannungen weitestgehend entkoppeln, befestigt. Sodann werden die elektrischen Kontakte zwischen den Leiterbahnen auf dem Träger 20 und den Steckerkontaktstiften 30 durch Bonddrähte 23 hergestellt. Schließlich wird der Deckel 14 durch Dichtklebeverbindungen 19 zwischen dem Träger 20 und dem Deckel 14 und 27 zwischen dem Deckel 14 und dem Basisteil 12 an dem Basisteil 12 befestigt. Auf diese Weise werden aufgrund der Ausgestaltung des Deckels 14 und des Basisteils 12 die beiden Räume 16 und 18 ausgebildet, wobei der Teil 21 des Trägers 20, auf dem der Drucksensor 40 befestigt ist, in dem Druckraum 16 angeordnet ist.

## Patentansprüche

1. Vorrichtung zur Erfassung des Drucks und der Temperatur im Saugrohr einer Brennkraftmaschine, wobei in einem gemeinsamen Gehäuse (10) ein Temperatursensor (70) und ein auf einem Träger (20) zusammen mit einer Auswerteschaltung weitestgehend verspannungsarm befestigter Drucksensor (40) angeordnet sind, wobei das Gehäuse (10) wenigstens zwei voneinander getrennte Räume (16, 18) umfaßt, dessen einer einen mit dem Saugrohr über einen Stutzen (15) verbundenen, gegenüber der Umgebung abgedichteten Druckraum (16) bildet, in dem der Teil (21) des Trägers (20) angeordnet ist, auf dem der Drucksensor (40) befestigt ist, und dessen anderer der Aufnahme und Befestigung des restlichen Teils des Trägers (20) mit Anschlußelementen (23) dient, wobei zur Befestigung des Trägers (20) und zur Abdichtung des Drucksensors (40) mechanische Spannungen entkoppelnde Dichtklebeverbindungen (22, 28) vorgesehen sind sowie der Stutzen (15) einstückig mit dem Gehäuse (10) verbunden und der Temperatursensor (70) in dem Stutzen (15) angeordnet ist.

2. Vorrichtung nach Anspruch 1, **dadurch gekennzeichnet, daß** das Gehäuse (10) ein Basisteil (12), an dem der Stutzen (15) angeordnet und die Trägerplatte durch mechanische Spannungen entkoppelnde Dichtklebeverbindungen (22) befestigt ist, und ein mit dem Basisteil (12) verbundenes Deckelteil (14) umfaßt, das über dem Träger liegend angeordnet und eine Wand (19) zur Ausbildung der beiden Räume (16, 18) aufweist, die mit dem Träger (20) durch eine, mechanische Spannungen entkoppelnde Dichtklebeverbindung (28) verbunden ist.

3. Vorrichtung nach Anspruch 2, **dadurch gekennzeichnet, daß** der Deckelteil (14) an dem Basisteil (12) ausschließlich über mechanische Spannungen entkoppelnde Dichtklebeverbindungen (27) befestigt ist.

4. Vorrichtung nach Anspruch 2, **dadurch gekennzeichnet, daß** an dem Basisteil in dem Druckraum (16) eine Auflagefläche (17) vorgesehen ist, an der der Träger durch eine, mechanische Spannungen entkoppelnde Dichtklebung (25) befestigt ist.

5. Vorrichtung nach einem der Ansprüche 1 bis 4, **dadurch gekennzeichnet, daß** um den Drucksensor (40) ein Ring (42) angeordnet ist und daß der Zwischenraum (44) zwischen dem Ring (42) und dem Drucksensor (40) mit einem chemikalienbeständigen Gel ausgefüllt ist.

6. Vorrichtung nach Anspruch 5, **dadurch gekennzeichnet, daß** das chemikalienbeständige Gel ein Fluorsilikon-Gel ist.

7. Vorrichtung nach einem der Ansprüche 1 bis 6, **dadurch gekennzeichnet, daß** der Temperatursensor (70) an dem Basisteil (12) derart befestigt ist, daß er in das Innere des Stutzens (15) ragt.

8. Vorrichtung nach Anspruch 7, **dadurch gekennzeichnet, daß** Anschlußleitungen (71) des Temperatursensors (70) durch einen an dem Stutzen (15) angeformten federnden Clipsbügel (95) an zwei an dem Stutzen (15) ausgebildete Backen geklemmt werden.

9. Vorrichtung nach Anspruch 8, **dadurch gekennzeichnet, daß** der Temperatursensor (70) und dessen Anschlußleitungen (71) mit einem Schutzlack oder einer Schutzbeschichtung, vorzugsweise einem Polyesterimidlack, überzogen sind.

10. Vorrichtung nach Anspruch 8 oder 9, **dadurch gekennzeichnet, daß** die Anschlußleitung (71) des Temperatursensors durch eine oder mehrere Dichtklebeverbindungen (22) zwischen dem Träger (20) und dem Basisteil (12) geführt sind.

11. Vorrichtung nach Anspruch 7, **dadurch gekennzeichnet, daß** der Temperatursensor (70) in eine in dem Stutzen ausgebildete Aufnahme geschoben und durch eine Klebeverbindung (22), die zwischen dem Träger und dem Basisteil angeordnet ist und die Enden der Anschlußleitungen (71) des Temperatursensors (70) umschließt, befestigt ist.

12. Vorrichtung nach Anspruch 11, **dadurch gekennzeichnet, daß** die Anschlußleitungen (71) des Temperatursensors (70) bis auf ihre zur Kontaktierung freiliegenden Enden teflonbeschichtet sind und daß sowohl die freiliegenden Enden als auch wenigstens ein Teilabschnitt der teflonbeschichteten Anschlußleitungen (71) in der Klebeverbindung (22) eingebettet sind.

13. Vorrichtung nach einem der voranstehenden Ansprüche, **dadurch gekennzeichnet, daß** zur Kontaktierung der Anschlußleitungen (71) des Temperatursensors (70) mit im Basisteil (12) angeordneten, nach außen geführten Steckerkontaktstiften (30) Schneidklemmverbindungen (73) vorgesehen sind.

14. Vorrichtung nach einem der Ansprüche 1 bis 12, **dadurch gekennzeichnet, daß** zur Kontaktierung der Anschlußleitungen (71) des Temperatursensors (70) mit im Basisteil (12) angeordneten, nach außen geführten Steckerkontaktstiften (30) Leitklebeverbindungen und/oder Lötverbindungen und/oder Schweißverbindungen vorgesehen sind.

15. Verfahren zur Herstellung einer Vorrichtung zur Erfassung des Drucks und der Temperatur im Saugrohr einer Brennkraftmaschine nach einem der voranstehenden Ansprüche, **gekennzeichnet durch** folgende Schritte
- Befestigen eines Temperatursensors (70) mit Anschlußleitungen (71) in einem Basisteil (12) eines Gehäuses (10);
- Herstellen der elektrischen Kontaktierung der Anschlußleitungen (71) mit Steckerkontaktstiften (30), die in dem Basisteil (12) vorgesehen sind;
- Befestigen eines Trägers (20) an dem Basisteil (12) **durch** elastische Dichtklebeverbindungen (22);
- Herstellen der elektrischen Kontakte zwischen Leiterbahnen des Trägers (20) und Steckerkontaktstiften (30) in dem Basisteil (12) und
- Befestigen eines Deckelteils (14) an dem Träger (20) und dem Basisteil (12) **durch** elastische Dichtklebeverbindungen (27, 28).

## Claims

1. Apparatus for detecting the pressure and the temperature in the intake pipe of an internal combustion engine, a temperature sensor (70) and a pressure sensor (40) secured on a carrier (20) with as little strain as possible together with an evaluation circuit being disposed in a common housing (10), the housing (10) comprising at least two separate chambers (16, 18), one of which forms a pressure chamber (16) which communicates with the intake pipe via a stub (15), is sealed off from the environment and in which is arranged that portion (21) of the carrier (20) on which the pressure sensor (40) is secured, and the other of which serves to receive and secure the remaining portion of the carrier (20) with connection elements (23), sealing adhesive joints (22, 28) that decouple mechanical stresses being provided to secure the carrier (20) and to seal off the pressure sensor (40), and the stub (15) being connected integrally to the housing (10), and the temperature sensor (70) being arranged in the stub (15).

2. Apparatus according to Claim 1, **characterized in that** the housing (10) comprises a base part (12), on which the stub (15) is disposed and the carrier board is secured by sealing adhesive joints (22) that decouple mechanical stresses, and a cap part (14), which is connected to the base part (12), is disposed above the carrier and has a wall (19) to form the two chambers (16, 18), which is connected to the carrier (20) by a sealing adhesive joint (28) that decouples mechanical stresses.

3. Apparatus according to Claim 2, **characterized in that** the cap part (14) is secured to the base part (12) solely via sealing adhesive joints (27) that decouple mechanical stresses.

4. Apparatus according to Claim 2, **characterized in that** a bearing face (17), to which the carrier is secured by a sealing adhesive bond (25) that decouples mechanical stresses, is provided on the base part in the pressure chamber (16).

5. Apparatus according to one of Claims 1 to 4, **characterized in that** a ring (42) is disposed around the pressure sensor (40), and **in that** the interstice (44) between the ring (42) and the pressure sensor (40) is filled with a chemical-resistant gel.

6. Apparatus according to Claim 5, **characterized in that** the chemical-resistant gel is a fluorosilicone gel.

7. Apparatus according to one of Claims 1 to 6, **characterized in that** the temperature sensor (70) is secured to the base part (12) in such a way that it protrudes into the interior of the stub (15)

8. Apparatus according to Claim 7, **characterized in that** connection lines (71) of the temperature sensor (70) are clamped to two cheeks formed on the stub (15) by a resilient clip (95) formed on the stub (15).

9. Apparatus according to Claim 8, **characterized in that** the temperature sensor (70) and its connection lines (71) are coated with a protective varnish or a protective coating, preferably a polyesterimide varnish.

10. Apparatus according to Claim 8 or 9, **characterized in that** the connection line (71) of the temperature sensor is passed through one or more sealing adhesive joints (22) between the carrier (20) and the base part (12).

11. Apparatus according to Claim 7, **characterized in that** the temperature sensor (70) is pushed into a receptacle formed in the stub and is secured by an adhesive joint (22) that is disposed between the carrier and the base part and surrounds the ends of the connection lines (71) of the temperature sensor (70).

12. Apparatus according to Claim 11, **characterized in that** the connection lines (71) of the temperature sensor (70) are Teflon-coated, except for their ends, which are exposed for contacting purposes, and **in that** both the exposed ends and at least one partial section of the Teflon-coated connection lines (71) are embedded in the adhesive joint (22).

13. Apparatus according to one of the preceding claims, **characterized in that** insulation displacement connections (73) are provided for contacting the connection lines (71) of the temperature sensor (70) to plug contact pins (30) disposed in the base part (12) and extended to the outside.

14. Apparatus according to one of Claims 1 to 12, **characterized in that** conductive adhesive joints and/or soldered joints and/or welded joints are provided for contacting the connection lines (71) of the temperature sensor (70) to plug contact pins (30) disposed in the base part (12) and extended to the outside.

15. Method for the production of an apparatus for detecting the pressure and the temperature in the intake pipe of an internal combustion engine according to one of the preceding claims, **characterized by** the following steps
- securing a temperature sensor (70) with connection lines (71) in a base part (12) of a housing (10);
- production of the electrical contacting of the connection lines (71) to plug contact pins (30), which are provided in the base part (12);
- securing a carrier (20) to the base part (12) by flexible sealing adhesive joints (22);
- production of the electrical contacts between conductor tracks of the carrier (20) and plug contact pins (30) in the base part (12), and
- securing a cap part (14) to the carrier (20) and the base part (12) by means of flexible sealing adhesive joints (27, 28).

## Revendications

1. Dispositif pour déterminer la pression et la température dans la conduite d'admission d'un moteur à combustion interne comprenant dans un même boîtier (10) un capteur de température (70) et un capteur de pression (40), ce dernier étant fixé avec aussi peu de renfort que possible sur un support (20) conjointement avec un circuit d'évaluation,
dans lequel
le boîtier (10) contient au moins deux chambres distinctes l'une de l'autre (16, 18) dont l'une forme une chambre de pression (16) étanche à son environnement et reliée à la conduite d'admission au travers d'un manchon (15), la chambre de pression (16) renfermant la partie (21) du support (20) sur laquelle est fixé le capteur de pression (40), et dont l'autre sert à la réception et à la fixation de l'autre partie du support (20) par le biais d'éléments de raccordement (23), des liaisons adhésives étanches (22) découplant la tension mécanique étant prévues pour la fixation du support (20) et pour l'étanchéification du capteur de pression (40), le manchon (15) est également relié d'un seul tenant avec le boîtier (10) et le capteur de température (70) est disposé dans le manchon (15).

2. Dispositif selon la revendication 1,
**caractérisé en ce que**
le boîtier (10) comprend une partie de base (12) sur laquelle le manchon est disposé et sur laquelle la plaque de support est fixée au moyen de liaisons adhésives étanches (22) découplant la tension mécanique, et comprend une partie de couvercle (14) reliée à la partie de base (12) au-dessus du support (20) et qui présente une paroi (19) permettant de former les deux chambres (16, 18) reliée au support (20) par une liaison adhésive étanche (28) découplant la tension mécanique.

3. Dispositif selon la revendication 2,
**caractérisé en ce que**
la partie de couvercle (14) est exclusivement fixée à la partie de base (12) au moyen de liaisons adhésives étanches (27) découplant la tension mécanique.

4. Dispositif selon la revendication 2,
**caractérisé en ce qu'**
il est prévu sur la partie de base à l'intérieur de la chambre de pression (16) une surface d'appui (17) sur laquelle est fixé le support au moyen d'un collage étanche (25) découplant la tension mécanique.

5. Dispositif selon l'une des revendications 1 à 4,
**caractérisé en ce qu'**
une bague (42) est disposée autour du capteur de pression (40) et l'espace (44) compris entre la bague (42) et le capteur de pression (40) est rempli d'un gel résistant aux agents chimiques.

6. Dispositif selon la revendication 5,
**caractérisé en ce que**
le gel résistant aux agents chimiques est un gel de fluorosilicone.

7. Dispositif selon l'une des revendications 1 à 6,
**caractérisé en ce que**
le capteur de température (70) est fixé à la partie de base (12) de telle manière qu'il fait saillie à l'intérieur du manchon (15).

8. Dispositif selon la revendication 7,
**caractérisé en ce que**
des lignes de raccordement (71) du capteur de température (70) sont maintenues sur deux mâchoires présentes sur le manchon (15) par un étrier élastique encliquetable (95) ménagé d'un seul tenant avec ledit manchon (15).

9. Dispositif selon la revendication 8,
**caractérisé en ce que**
le capteur de température (70) et ses lignes de raccordement (71) sont recouverts d'un vernis protecteur ou d'un revêtement protecteur, un vernis polyesterimide étant préféré.

10. Dispositif selon l'une des revendications 8 ou 9,
**caractérisé en ce que**
les lignes de raccordement (71) du capteur de température passent au travers d'une ou plusieurs liaisons adhésives étanches (22) disposées entre le support (20) et la partie de base (12).

11. Dispositif selon la revendication 7,
**caractérisé en ce que**
le capteur de température (70) est introduit dans un logement formé dans le manchon et est fixé au moyen d'une liaison adhésive (22) disposée entre le support et la partie de base et renfermant les extrémités des lignes de raccordement (71) du capteur de température (70).

12. Dispositif selon la revendication 11,
**caractérisé en ce que**
les lignes de raccordement (71) du capteur de température (70), à l'exception de leurs extrémités dénudées servant à établir la connexion, sont revêtues de téflon, et ces extrémités dénudées aussi bien qu'au moins une section des lignes de raccordement (71) revêtues de téflon sont introduites dans la liaison adhésive (22).

13. Dispositif selon l'une des revendications précédentes,
**caractérisé en ce que**
des contacts autodénudants (73) sont prévus afin d'établir la connexion entre les lignes de raccordement (71) du capteur de température (70) et des broches de contact (30) disposées dans la partie de base (12) et dirigées vers l'extérieur.

14. Dispositif selon l'une des revendications 1 à 12,
**caractérisé en ce que**
des liaisons adhésives conductrices et/ou des liaisons soudées et/ou des liaisons brasées sont prévues afin d'établir la connexion entre les lignes de raccordement (71) du capteur de température (70) et des broches de contact (30) disposées dans la partie de base (12) et dirigées vers l'extérieur.

15. Procédé de production d'un dispositif pour déterminer la pression et la température dans la conduite d'admission d'un moteur à combustion interne selon l'une des revendications précédentes,
**caractérisé par** les étapes suivantes consistant à :
- fixer un capteur de température (70) comportant des lignes de raccordement (71) dans la partie de base (12) d'un boîtier (10) ;
- produire la connexion électrique entre les lignes de raccordement (71) et des broches de contact (30) prévues dans la partie de base (12);
- fixer un support (20) sur la partie de base (12) au moyen de liaisons adhésives étanches élastiques (22) ;
- produire les connexions électriques entre les pistes conductrices du support (20) et les broches de contact (30) prévues dans la partie de base (12) et
- fixer une partie de couvercle (14) sur le support (20) et la partie de base (12) au moyen de liaisons adhésives étanches élastiques (27, 28).
